# EUROPEAN PATENT APPLICATION

(11) **EP 4 520 731 A1**
(43) Date of publication of application: **12.03.2025**
(21) Application number: 24199097.7
(22) Date of filing: 06.09.2024
(51) Int. Cl.: C02F 1/28, C02F 1/00, E04D 13/04, E04G 23/00, E06B 1/70, E06B 7/00, E03B 3/02, C02F 1/38, C02F 1/52

(54) **WINDOW SILL WITH FAÇADE WATER TREATMENT FUNCTION**

(30) Priority: 06.09.2023 EP 23195840
(71) Applicant: Gerätebau Schwarzer AG, 3076 Worb (CH)
(72) Inventor: Schwarzer, Hans, 3076 Worb (CH); Nakanishi, Hitomi, 3202 Frauenkappelen (CH)
(74) Representative: Braunpat AG

(57) **Abstract**

The present invention is directed to a window sill (1) with façade water treatment function comprising a window sill (2000) and a device (1000) for purifying water flowing down the surface of a building and/or the windowsill (2000) comprising a receptive module (100), a releasable cover (16) and a purification module,
- whereby the receptive module (100) comprises a back wall (11), a front wall (12) and an at least partially water-permeable bottom (15) to provide an internal space (120); is fastened to the window sill (2000) such that the water flowing down the external surface of the building and/or the window sill (2000) is directed towards the internal space (120); and is configured to receive the purification module;
- whereby the cover (16) is at least partially water-permeable and covers the receptive module; and
- whereby the purification module is configured to purify said water.

The present invention is further directed to the receptive module (100) itself as well as to said device (1000).

## Description

### Technical Field

The present invention is directed to a window sill with façade water treatment function comprising a window sill and a device for purifying water that is flowing down the external surface of a building and/or the window sill, so called "façade water", whereby the device comprises a receptive module, a releasable cover and a purification module,
- whereby the receptive module comprises a back wall, a front wall and an at least partially water-permeable bottom to provide an internal space;
- whereby the receptive module is fastened to the window sill such that the water flowing down the external surface of the building and/or the window sill is directed towards the internal space of the receptive module;
- whereby the cover is at least partially water-permeable and covers the receptive module;
- whereby the receptive module is configured to receive the purification module; and
- whereby the purification module is configured to purify said water.

The present invention is further directed to the receptive module itself as well as to said device.

In an embodiment of the window sill with façade water treatment function of the present invention, the back wall is fastened to the window sill at its upper part and the top end of its upper part, respectively. Instead of fastening the receptive module and the device, resprectively, via its back wall to the window sill, the window sill and the receptive module and the device, respectively, could be formed in one piece. This one-piece embodiment of the window sill with façade water treatment function according to the invention is preferred.

The window sills with façade water treatment function, the devices and the receptive modules of the present invention allow the filtration of façade water and thus, partially prevent that environmentally harmful particles or substances can be washed out from the façade and get into the soil, the ground water, the sewage system and in water bodies close to settlements.

### Background of the invention

To avoid undesirable green coatings on house walls due to algae and/or fungi growth, many homeowners turn to paints with biocides and/or fungicides. Their main task is to kill algae and fungi growing on the external wall or the façade which is mainly caused by the formation of condensation water. These paints are very durable, so that the façades or external walls, i.e., the external surfaces remain protected for several years.

But these toxins contained in the paints may pollute the environment when washed out by rain or condensation water constantly damping the external surface of a building or in the case the external surface of a building is cleaned with water and/or detergents.

In addition, the façade paint and the paint for the external walls of a building, respectively, weathers over time due to seasonal temperature fluctuations and sunlight. In addition, harmful particles adsorbed from the air condensate on the external surface of a building. The biocides and fungicides, as well as any of the harmful particle adsorbed thereon are sooner or later washed out and end up in the soil, the ground water, the sewage system and/or in water bodies close to settlements.

All of these biocides, fungicides and harmful particles can be extremely harmful to humans which take them up via the drinking water, as well as to aquatic organisms and fish. In addition, biocides may have an indirect effect on insect mortality, as their use reduces the food supply for insects.

Thus, there is a need to at least partially prevent that biocides and fungicides, or any other harmful particles being washed out from façades, or external surfaces of buildings in general, or their paints end up in the soil, the ground water, the sewage system and in water bodies close to settlements.

This need is satisfied by the window sills with façade water treatment function, the devices and the receptive modules according to the present invention.

### Description of the invention

The present invention is directed to a window sill with façade water treatment function comprising a window sill and a device for purifying water flowing down the external surface of a building and/or the window sill, whereby the device comprises a receptive module, a releasable cover and a purification module,
- whereby the receptive module comprises a back wall, a front wall and an at least partially water-permeable bottom to provide an internal space;
- whereby the receptive module is fastened to the window sill such that the water flowing down the external surface of the building and/or the window sill is directed towards the internal space of the receptive module,
- whereby the cover is at least partially water-permeable and covers the receptive module;
- whereby the receptive module is configured to receive the purification module; and
- whereby the purification module is configured to purify said water.

The term "external surface of a building" encompasses the surface of any type of wall or façade of a building. The walls or façades of buildings may be made of any material such as e.g., wood, concrete, stone, foam material, plastic material, rock wool or glass wool. The term "water flowing down the external surface of a building and/or the window sill" encompasses rain or snow or any other form of water flowing down the external surface of the building and/or the window sill as well as water condensed on the external surface of the building and/or the window sill which then flows down said surface and/or said window sill.

The term "window sill with façade water treatment function" means that such window sill encompasses a window sill as known to the person skilled in the art and the device according to the present invention. The term "façade water treatment" means that the façade water is treated in any way, preferably it is treated in such a way so that it has a higher purity after the treatment, because the amount of biocides, fungicides and/or harmful particles has been reduced.

In a preferred embodiment of the invention, the device is fastened to the window sill by connecting the upper part of the back wall of the receptive module with the lower end of the window sill.

In another preferred embodiment of the invention, the back wall, the front wall and the bottom of the receptive module are formed in one piece, more preferably in the shape of a U-profile.

Since the bottom is at least partially water-permeable, the bottom preferably comprises a plurality of openings. The openings can be of any form or size such as e.g., holes, slits, etc. Alternatively, the bottom could be shaped as a grid or be perforated. In an embodiment of the present invention, the front half of the bottom comprises a plurality of openings whereas the back half of the bottom comprises no openings.

Since the cover is preferably at least partially water-permeable, the cover preferably has a plurality of openings, more preferably it has a plurality of slits or could be configured as a grid.

In a further preferred embodiment, the bottom **and** the cover comprise each a plurality of openings, whereby preferably the cover has a plurality of slits **and** the bottom is perforated.

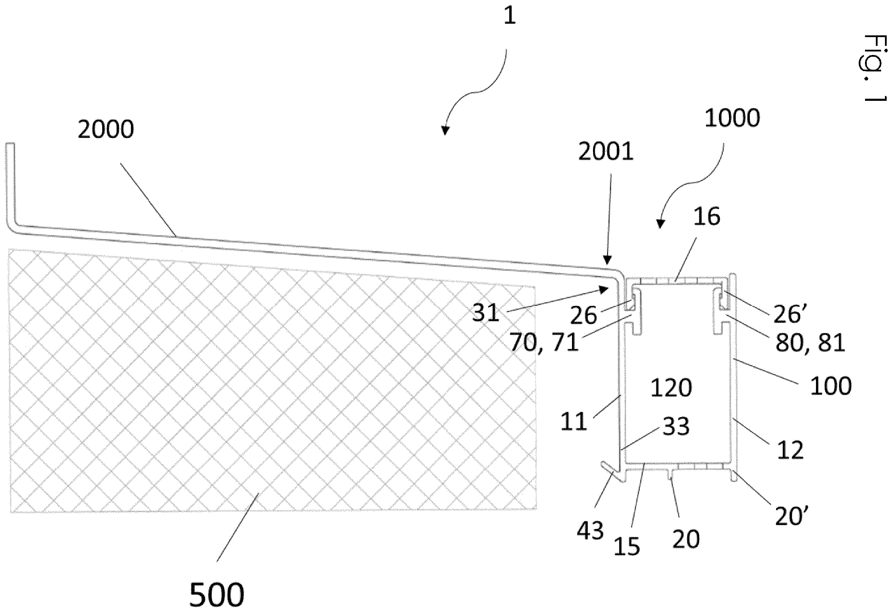

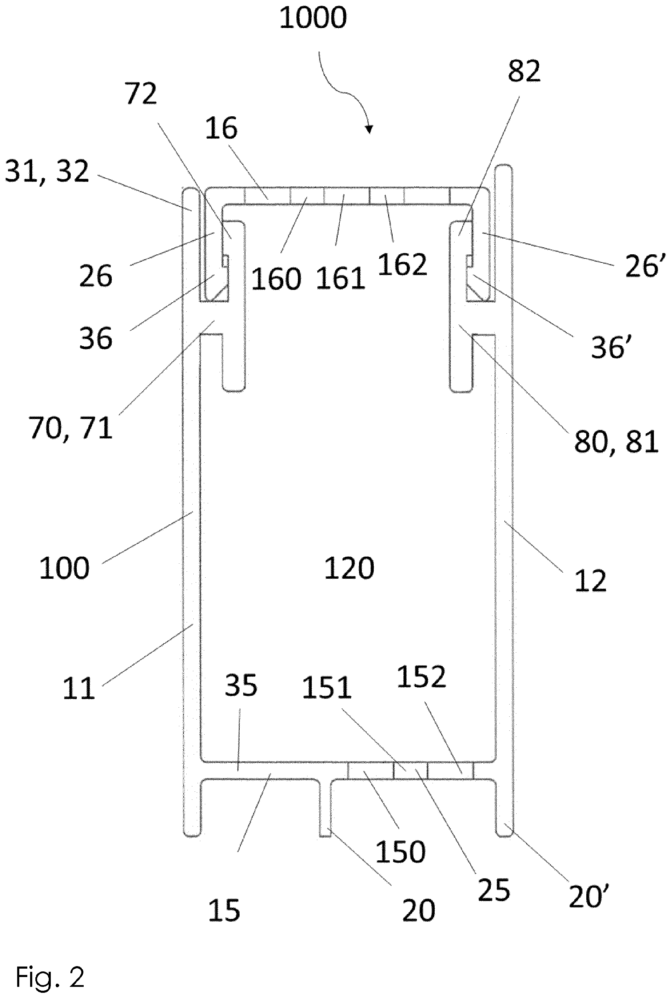

Advantageously the cover can be inserted in the interior of the receptive module, i.e., the internal space, which facilitates the water to be purified to be directed thereto. The cover could e.g., be clamped into the receptive module. In a preferred embodiment of the present invention the side walls of the cover have hook-shaped ends which correspond to hook-shaped ends of receiving means of the receptive module, i.e. they correspond preferably to hook-shaped ends of guiding rails in the upper part of the front wall and the back wall of the receptive module as shown in Fig. 1 and 2.

In a preferred embodiment, the device according to the present invention further comprises at least one side cover detachably attached to the receptive module. More preferably the device comprises two side covers detachably attached to the receptive module which may function as kind of end caps and form closed side walls of the receptive module.

Thus, in one preferred embodiment of the device of the present invention the back wall, the bottom and the front wall is formed as one piece in a U-shape and can be covered at the top by the cover such to provide a hollow body with open lateral sides. This device can be seen as a first arrangement having an elongated hollow body with a rectangular form. The first lateral side can be closed with the first side cover and the second lateral side with a second side cover, both configured as detachable side covers. Therefore, the device can be provided as a hollow body closed on three sides and closable by removable covers at the top and/or at one lateral side or both lateral sides. By removing the cover from the top, the interior of the receptive module and thus, the device is accessible to insert or to remove the purification module after use. To complete the device for the use, the top and the lateral sides are closed by arranging the removable corresponding covers.

Thus, in an embodiment of the window sill with façade water treatment function, the receptive module and the device of the present invention, respectively, the back wall comprises a means to receive the cover or a means to receive the first side cover or a means to receive the second side cover. In case the side covers are detachably attached, the back wall preferably comprises two means at each end to receive the first side cover and the second side cover; more preferably these two means are located distant to each other, e.g., one in the upper part of the back wall and the other in the lower part of the back wall.

Instead of having such means in the lower part of one wall, the bottom could also comprise such means to receive the first side cover or to receive the second side cover.

In a preferred embodiment of the device of the present invention the sides covers are non-detachably attached to the receptive module, i.e. the back wall, the bottom, the front wall and both side covers/side walls are formed as one piece in a U-shape and can be covered at the top by the cover. In this embodiment, the back wall as well as the front wall preferably each comprises a means to receive the cover.

In an alternative embodiment of the window sill with façade water treatment function and the device of the present invention, respectively, the back wall, the cover and the bottom are non-detachably fixed to each other to result in a second fixed arrangement. If the front wall is put on this second fixed arrangement, the form of it is an elongated hollow body with two open lateral sides. The first lateral side can be closed with a first side cover and the second lateral side with a second side cover. The first and second side cover can be designed as detachable side covers. Furthermore, they both can be designed as being openable and closable or only one of them can be designed in such a way. Preferably the first and second side cover are fixed side covers, i.e. non-detachable side walls. The front wall is removable from this second fixed arrangement so that the purification module may be put into the second fixed arrangement and removed again after use through the opening that is formed when the front wall is removed. The front wall can be designed as being openable and closable.

Each wall of the receptive module, in particular the back wall and the front wall, has a certain dimension defined by a height in vertical direction and by a length extending parallel to the external surface of the building and a certain width in horizontal direction, i.e., the distance of the back wall and the front wall to each other.

The receptive module as well as the side covers/side walls and the cover can be made from aluminum or from any plastic; preferably they are made from aluminum which is more weather resistant.

In an embodiment of the window sill with façade water treatment function and the device of the present invention, respectively, the back wall and the front wall of the receptive module have a different height, wherein the back wall is higher than the front wall.

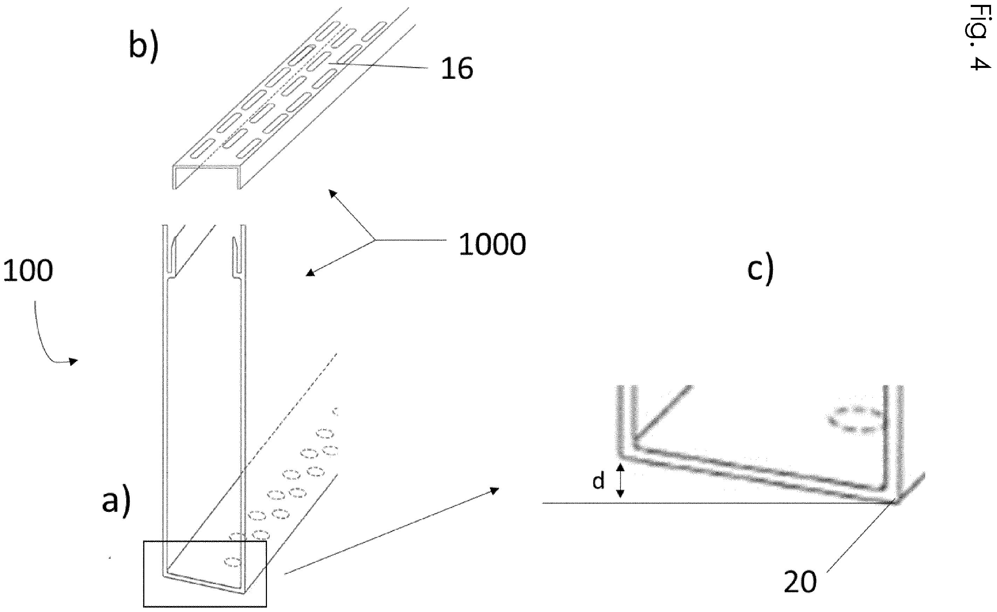

In an embodiment of the window sill with façade water treatment function and the device of the present invention, respectively, the receptive module comprises at least one drip point. This may be achieved by lowering the front wall in relation to the back wall, e.g., by a certain height difference d as shown in Fig. 4 d, so that the bottom of the receptive module is inclined. By this inclination a drip point is formed.

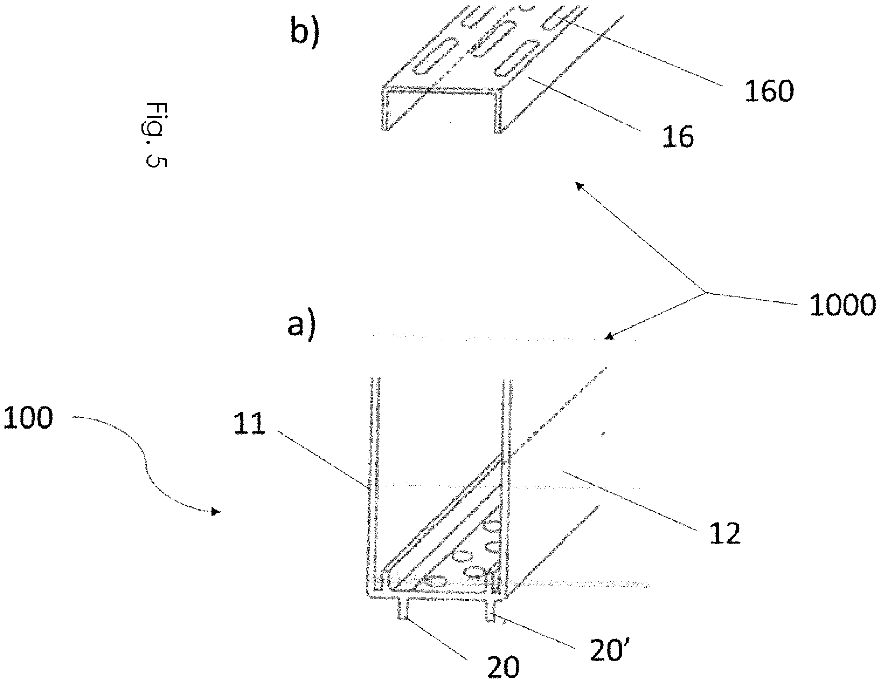

In an alternative embodiment of the window sill with façade water treatment function and the device of the present invention, respectively, the bottom of the receptive module is not inclined, but provided with two drip points as shown in Fig. 5a. In the embodiment as shown in Fig. 1, the back wall is configured at the end of its lower part in such a way so that the mounting of the window sill is facilitated, especially is there a hook-shaped mounting aid at the lower part of the back wall.

In an embodiment of the window sill with façade water treatment function and the device of the present invention, respectively, the purification module for purifying the water flowing down the external surface of the building and/or the window sill comprises activated carbon and/or any other substance which is able to adsorb environmentally harmful particles contained in said water. The activated carbon and/or any other substance which is able to adsorb environmentally harmful particles contained in said water can be provided in a cartridge. It can furthermore be provided in any form or size that is suitable such as e.g., as powder, chips, grains or sand-like. Foams equipped with activated carbon, and/or any other absorbing substance may also be used.

The term "environmentally harmful particles" encompasses any biocide or toxin contained in any paint put on the external surface of a building and/or a window sill as well as any environmentally harmful substance which is adsorbed or absorbed on the external surface of a building and/or a window sill. The term "toxin" encompasses any substance being toxic for a living organism, i.e., any biocide such as e.g. algicides and fungicides.

In another embodiment of the window sill with façade water treatment function, the device and the receptive module of the present invention, respectively, the back wall can comprise a means to receive the cover. Preferably the back wall and the front wall both comprise each a means to receive the cover.

In a preferred embodiment of the window sill with façade water treatment function and the device according to the present invention, respectively, the receiving means are guiding rails which extend at least partially along the length of the back wall and/or the front wall and/or the bottom. Preferably these guiding rails extend along the complete length of the back wall and/or the front wall and/or the bottom.

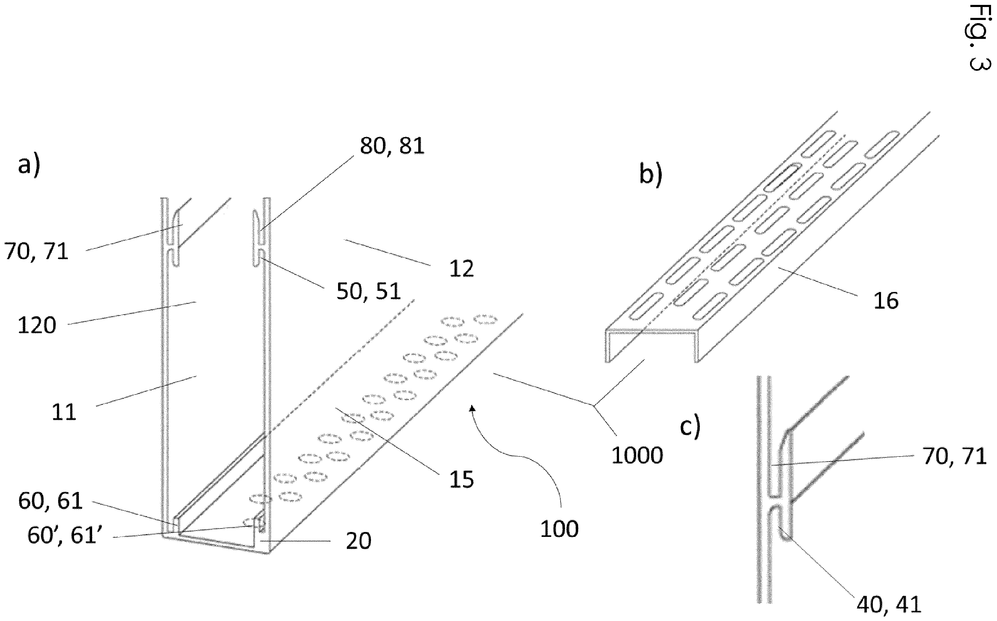

As shown in Fig. 3a the receiving means in the bottom of the device according to the present invention are preferably U-shaped. If the bottom of the receptive module is inclined, it is advantageous if the guiding rails at the bottom near the front wall are higher than the guiding rails at the bottom near the back wall.

As shown in Fig. 4a the means in the upper part of the back and the front wall for receiving the cover of the device according to an embodiment of the present invention are preferably U-shaped.

As shown in Fig. 1a, 2a and 3a the means of the back wall and of the front wall to receive the cover are preferably a double U-shaped guiding trail in another preferred embodiment of the present invention.

As shown in Fig. 1 and 2 the guiding rails supposed to receive the cover and located at the upper part of the back wall and the front wall, respectively, are preferably hook-shaped at their ends. More preferably the ends of the side walls of the cover are also hook-shaped, so that the ends correspond to each other, and the cover is clamped and secured on the receptive module.

In an embodiment of the window sill with façade water treatment function, the device and the receptive module of the present invention, respectively, the water-permeability of the receptive module is achieved by using perforated parts. The number of openings is chosen such that an effective filtration is guaranteed also in case of heavy rain falls.

Therefore a perforated bottom and a perforated cover are preferably used. The form and size of the openings is such that a fast flow of the water through the device is guaranteed.

The device and the receptive module according to the present invention, respectively, may be fastened to the window sill by any method and with any possible fastening element known to the person skilled in the art, i.e. the device and the receptive module according to the present invention, respectively may be fastened to the window sill by welding, gluing, hanging, screwing, or riveting. In an alternative embodiment the window sill and the device and the receptive module, respectively, may be formed in one piece.

It is to be understood that the present invention also encompasses any combination of any feature of any embodiment of the window sill with façade water treatment function and/or the receptive module and/or the device according to the present invention with each other though not explicitly mentioned.

The present invention is further directed to the receptive module itself. Thus, the present invention is directed to a receptive module, configured to receive a purification module to purify water flowing down the external surface of a building and/or a window sill and configured to be mounted to the window sill, whereby the receptive module comprises a back wall, a front wall and an at least partially water-permeable bottom to provide an internal space for the water.

In a preferred embodiment the receptive module further comprises
- a plurality of openings in the bottom, and/or
- at least one drip point at the bottom, and/or
- means at the back wall and/or means at the front wall and/or means at the bottom, whereby these means are configured to receive a side cover and/or to receive a cover.

Furthermore, the receptive module is configured to receive a cover. This may be achieved e.g. by means at the back wall and/or at the front wall configured to receive the cover, such as preferably guiding rails.

It is to be understood that the present invention also encompasses any combination of any feature of any embodiment of the receptive module with each other though not explicitly mentioned including those features mentioned when describing the window sill with façade water treatment function, the receptive module and the device according to the present invention, respectively, above.

For permanent use, the purification module for purifying the water flowing down the external surface of the building and/or the window sill preferably comprises activated carbon and/or any other substance which is able to adsorb environmentally harmful particles contained in said water.

The present invention is now further illustrated by the following non-limiting examples that show preferred embodiments of the present invention.

### Short Description of the drawings

Fig. 1 shows a window sill with façade water treatment function according to a preferred embodiment of the present invention.
Fig. 2 shows a receptive module and a device according to a preferred embodiment of the present invention, respectively.
Fig. 3-5 show different embodiments of the receptive module and the device according to the present invention, respectively. Fig. 3a and 4a show hereby different embodiments of the receptive module of the present invention. Fig. 3b and 4b show the cover.
Fig. 5a shows an alternative design of the receptive module and of the device according to the present invention, respectively, whereby the bottom is not inclined but provided with two drip points 20, 20'. Fig. 5b shows the cover 16 with a plurality of openings 160.

### Preferred embodiments of the present invention

Fig. 1 shows a preferred window sill 1 with façade water treatment function according to the present invention whereby the window sill 2000 and the device 1000 are formed in one piece. The bottom 15 of the receptive module 100 has two drip points 20, 20' and its back wall 11, as well as its front wall 12 both have double U-shape guiding rails 71, 81 in their upper parts as means 70, 80 to receive the cover 16. Hereby the ends 72, 82 of such guiding rails are hook-shaped, as well as the ends 36, 36' of the side walls 26, 26' of the cover 16, so that a reliable tight fit of the cover 16 on the receptive module 100 is guaranteed. The window sill 1 is mounted to the building (wall 500) below a window by any means known to the person skilled in the art. The mounting of the window sill is facilitated by the hook-shaped extension 43 in the lower part 33 of the back wall 11. The back wall 11, the front wall 12, the bottom 15 and the side covers 13, 14 (not shown) of the receptive module 100 form an internal space to receive the purification module (not shown).

Fig. 2 shows only the device 1000 of the window sill 1 with façade water treatment function as shown in Fig. 1. Hereby the hook-shaped ends 72, 82 of the guiding rails 71, 81 of the back wall and the front wall as well as the hook-shaped ends 36, 36' of the side walls 26, 26' of the cover 16 are especially visible. Furthermore the cover 16 as well as the bottom 15 have a plurality of openings 160, 161, 162, 150, 151, 152, whereby preferably the back half 35 of the bottom 15 has no openings, whereas the front half 25 of the bottom 15 has a plurality of openings.

Fig. 3a shows an embodiment of the receptive module 100 according to the present invention, whereby the back wall 11, the front wall 12 and the bottom 15 form a first fixed arrangement on which the cover 16 (shown in Fig. 3b) can be put on. The back wall 11, the front wall 12 and the bottom 15 are connected not-detachably with each other to provide the internal space 120. This arrangement resembles the lower part of an elongated hollow body. The front wall 12 is slightly lowered compared to the back wall 11, so that the bottom is inclined and a water nose, a so-called drip point, is formed at 20 (see also Fig. 4d).

The embodiment of the device according to Fig. 3) comprises means for receiving a side cover at the back wall (means 40), at the front wall (means 50) and at the bottom (means 60, 60'). These means are formed as guiding rails 41, 51, 61 and 61'. The bottom 15 is perforated and has many openings to allow a fast flow of water to be purified through the device 100. The water enters the device via the perforated cover 16.

There are means 70 for receiving the cover 16 at the inner side of the back wall and means 80 for receiving the cover 16 at the inner side of the front wall, so that the cover 16 is received between the sides of the back and the front wall that show to the interior of the device 100. These receiving means 70 and 80 are formed as guiding rails 71 and 81. It can be seen from Fig. 3a) that the guiding rails 61 and 61' on the bottom are U-shaped, and the guiding rails 41 and 71 at the back wall (see the enlarged image of it in Fig. 3c)) and the guiding rails 51 and 81 at the front wall are formed in a double U-shape.

In the device according to Fig. 3 the purification module 200 (not shown) may be put into the device 100 via the opening that is formed when the cover 16 is removed (see Fig. 3a).

Fig. 4 shows a modified embodiment of the device 100 according to the present invention. Here the first side cover 13 and the second side cover 14 could be clamped into the receptive module 100. Fig. 4 c) shows the height difference d) by which the front wall 12 is lowered in relation to the back wall 11.

Fig. 5a shows an alternative design of the receptive module 100 and of the device 1000 according to the present invention, respectively, whereby the bottom 15 is not inclined but provided with two drip points 20, 20'. Fig. 5b shows the cover 16 with a plurality of openings 160.

### List of reference signs

- 1: window sill with façade water treatment function

- 2000: window sill
- 2001: lower end of the window sill

- 1000: device

- 100: receptive module
- 120: internal space

- 11: back wall
- 12: front wall
- 13: first side cover
- 14: second side cover

- 15: bottom
- 25: front half of the bottom
- 35: back half of the bottom

- 16: cover
- 26, 26': side walls of the cover
- 36, 36': hook-shaped ends of the side walls 26, 26' of the cover

- 20, 20': drip point

- 31: upper part of the back wall
- 32: top end of the back wall
- 33: lower part of the back wall
- 43: hook-shaped extension of the lower part 33 of the back wall (mounting aid for the installation of the window sill)

- 40: means of the back wall to receive a side cover
- 41: guiding rail of the back wall to receive a side cover

- 50: means of the front wall to receive a side cover
- 51: guiding rail of the front wall to receive a side cover

- 60, 60': means of the bottom to receive a side cover
- 61, 61': guiding rail of the bottom to receive a side cover

- 70: means of the back wall to receive a cover
- 71: guiding rail of the back wall to receive a cover
- 72: hook-shaped end of the guiding rail 71

- 80: means of the front wall to receive a cover
- 81: guiding rail of the front wall to receive a cover
- 82: hook-shaped end of the guiding rail 81

- 150, 151, 152: openings of the bottom
- 160, 161, 162: openings of the cover

- 200: purification module

- d: height difference between the back wall and the front wall

- 500: external surface of a building such as e.g., an external wall or a façade of a building

## Claims

1. A window sill (1) with façade water treatment function comprising a window sill (2000)and a device (1000) for purifying water flowing down the external surface of a building and/or the window sill (2000), whereby the device (1000) comprises a receptive module (100), a releasable cover (16) and a purification module (200),
- whereby the receptive module (100) comprises a back wall (11), a front wall (12) and an at least partially water-permeable bottom (15) to provide an internal space (120);
- whereby the receptive module (100) is fastened to the window sill (2000) such that the water flowing down the external surface of the building and/or the window sill (2000) is directed towards the internal space (120) of the receptive module;,
- whereby the cover (16) is at least partially water-permeable and covers the receptive module (100);
- whereby the receptive module (100) is configured to receive the purification module (200); and
- whereby the purification module (200) is configured to purify said water.

2. A device (1000) for purifying water flowing down the external surface of a building and/or a window sill, whereby the device (1000) is fastenable to a window sill, and whereby the device (1000) comprises a receptive module (100), a releasable cover (16) and a purification module (200),
- whereby the receptive module (100) comprises a back wall (11), a front wall (12) and an at least partially water-permeable bottom (15) to provide an internal space (120);
- whereby the receptive module (100) is fastenable to the window sill such that the water flowing down the external surface of the building and/or the window sill is directed towards the internal space (120) of the receptive module;
- whereby the cover (16) is at least partially water-permeable and covers the receptive module (100);
- whereby the receptive module (100) is configured to receive the purification module (200); and
- whereby the purification module (200) is configured to purify said water.

3. A receptive module (100) comprising a back wall (11), a front wall (12) and an at least partially water-permeable bottom (15) to provide an internal space (120);
- whereby the receptive module (100) is fastenable to a window sill (2000) such that water flowing down the external surface of a building and/or said window sill is directed towards the internal space (120) of the receptive module;
- whereby the receptive module (100) is configured to receive a purification module (200) to purify said water; and
- whereby the receptive module (100) is configured to receive an at least partially water-permeable cover (16).

4. The window sill (1) with façade water treatment function according to claim 1 or the device (1000) according to claim 2, whereby the purification module (200) for purifying the water flowing down the external surface of the building and/or the window sill comprises activated carbon and/or any other substance which is able to adsorb environmentally harmful particles contained in said water.

5. The window sill (1) with façade water treatment function according to claim 1 or 4 or the device (1000) according to claim 2 or 4 or the receptive module (100) according to claim 3, whereby the receptive module (100) comprises two side covers (13, 14) attached to the receptive module (100), preferably whereby the receptive module (100) and the side covers (13, 14) are formed in one piece.

6. The window sill (1) with façade water treatment function according to any one of claims 1, 4 or 5 or the device (1000) according to any one of claims 2, 4 or 5 or the receptive module (100) according to any one of claims 3 or 5 whereby the back wall (11), the front wall (12) and the bottom (15) of the receptive module (100) are formed in one piece, preferably whereby the back wall (11), the front wall (12), the bottom (15) and the side covers (13, 14) of the receptive module (100) are formed in one piece.

7. The window sill (1) with façade water treatment function according to any one of claims 1, 4, 5 or 6 or the device (1000) according to any one of claims 2, 4, 5 or 6 or the receptive module (100) according to any one of claims 3, 5 or 6, whereby the back wall (11) and/or the front wall (12) and/or the bottom (15) comprises a means (40, 50, 60) to receive the side covers (13, 14), and/or whereby the back wall (11) and/or the front wall (12) comprises a means (70, 80) to receive the cover (16).

8. The window sill (1) with façade water treatment function according to claim 7 or the device (1000) according to claim 7 or the receptive module according to claim 7, whereby the means (40, 50, 60, 70, 80) are U-shaped guiding rails or whereby the means (40, 50, 70, 80) are double U-shaped guiding rails.

9. The window sill (1) with façade water treatment function according to any one of claims 1, 4, 5, 6, 7 or 8 or the device (1000) according to any one of claims 2, 4, 5, 6, 7 or 8 or the receptive module (100) according to any one of claims 3, 5, 6, 7 or 8, , whereby the bottom (15) and/or the cover (16) comprise a plurality of openings.

10. The window sill (1) with façade water treatment function according to any one of claims 1, 4, 5, 6, 7, 8 or 9 or the device (1000) according to any one of claims 2, 4, 5, 6, 7, 8 or 9 or the receptive module (100) according to any one of claims 3, 5, 6, 7, 8 or 9, whereby the receptive module (100) comprises at least one drip point (20), preferably whereby the receptive module (100) comprises two drip points (20, 20').

11. The window sill (1) with façade water treatment function according to any one of claims 1 and 4 to 10 or the device (1000) according to any one of claims 2 and 4 to 10 or the receptive module (100) according to any one of claims 3 and 5 to 10, whereby the cover (16) has side walls (26, 26') with hook-shaped ends (36, 36').

12. The window sill (1) with façade water treatment function or the device (1000) or the receptive module (100) according to claim 11, whereby the ends (72, 82) of the guiding rails (71, 81) in the upper part of the back wall (11) and/or the front wall (12) are hook-shaped.

13. The window sill (1) with façade water treatment function according to any one of claims 1 and 4 to 12, whereby the window sill (2000) and the device (1000) are formed in one piece.

14. The window sill (1) with façade water treatment function according to any one of claims 1 and 4 to 13 or the device (1000) according to any one of claims 2 and 4 to 12 or the receptive module (100) according to any one of claims 3 and 5 to 12, whereby the bottom (15) of the receptive module (100) is inclined.

15. The window sill (1) with façade water treatment function according to any one of claims 1 and 4 to 13, whereby the device (1000) is fastened to the window sill (2000) by connecting the upper part (31) of the back wall of the receptive module (100) with the lower end (2001) of the window sill.
